# EUROPEAN PATENT SPECIFICATION

(11) **EP 2 876 944 B1**
(45) Date of publication and mention of the grant of the patent: **20.03.2019**
(21) Application number: 13831148.5
(22) Date of filing: 22.07.2013
(51) Int. Cl.: H04W 52/02

(54) **NETWORK CARD DEVICE, ROUTING DEVICE, SYSTEM AND METHOD FOR REALIZING DYNAMIC SLEEP AND WAKEUP**
NETZWERKKARTENVORRICHTUNG, ROUTINGVORRICHTUNG, SYSTEM UND VERFAHREN ZUR DURCHFÜHRUNG VON DYNAMISCHEM SCHLAFEN UND AUFWECKEN
DISPOSITIF DE CARTE DE RÉSEAU, DISPOSITIF DE ROUTAGE, SYSTÈME ET PROCÉDÉ POUR RÉALISER UN SOMMEIL ET UN RÉVEIL DYNAMIQUES

(30) Priority: 21.08.2012 CN 201210299145
(43) Date of publication of application: 27.05.2015
(73) Proprietor: ZTE Corporation, Shenzhen, Guangdong 518057 (CN)
(72) Inventor: YUAN, Zhenkun, Shenzhen Guangdong 518057 (CN); ZHAO, Haitao, Shenzhen Guangdong 518057 (CN)
(74) Representative: Jones, Cerian
(86) International application number: PCT/CN2013/079787
(87) International publication number: WO 2014/029248

(56) References cited:
- WO-A1-2011/094081
- CN-A- 101 572 610
- CN-A- 102 299 944
- CN-A- 102 547 935
- CN-A- 102 833 831
- US-A1- 2007 066 273
- SHENZHEN C: "Dynamic Setup of HNBs for Energy Savings and Interference Reduction", 3RD GENERATION PARTNERSHIP PROJECT (3GPP); TECHNICALSPECIFICATION GROUP (TSG) RADIO ACCESS NETWORK (RAN); WORKINGGROUP 3 (WG3), XX, XX, vol. R3-080658, 31 March 2008 (2008-03-31) , pages 1-6, XP003023429,

## Description

### Technical Field

The present invention relates to the technical field of mobile radio communication system, and more particularly, to a network card device, routing device, system and method for realizing dynamic sleep and wakeup.

### Background of the Invention

With the widespread use of the Internet in people's lives, as well as the large-scale application of third-generation and even upgraded mobile network technologies, portable wireless routers gradually enter into people's lives and provide people with more convenient wireless Internet access mode. Because the features that the portable wireless router is compact, portable, and can provide access of the Internet anytime and anywhere, a wireless network card combining with a portable wireless router has become an Internet access medium which is increasingly popular in users. It can be expected that, with the development of mobile network technology, network bandwidth continuously increases, network coverage is more and more optimized, and usage rate is more and more attractive, and this mode will become a mainstream mode of Internet access.

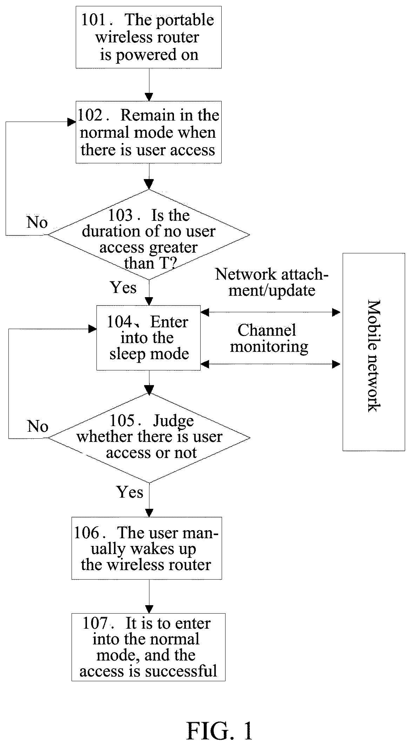

Based on the consideration of reducing power consumption and increasing the life time, the design of the existing portable wireless router uses the following method process, as shown in FIG. 1, it comprises:
In step 101, the portable wireless router is powered on and is in the power-on state.

In Step 102, when there is user access, the portable wireless router remains in the normal mode, and the portable wireless router in the normal mode maintains the maximal power consumption.

In Step 103, when there is no user access, it is to judge whether the duration of no user access is greater than T (e.g., 10 minutes) or not, if yes, it is to proceed to step 104; otherwise, it is to proceed to step 102.

In Step 104, it is to enter into the sleep mode. After entering into the sleep mode, the router is in the power saving state, and the power consumption is much lower than that in the normal mode.

Herein, the portable wireless router in the sleep mode needs to continue monitoring the mobile network channel and maintaining the mobile network attachment and update.

In Step 105, it is to judge whether there is user access or not, if yes, it is to proceed to step 106; otherwise, it is to proceed to step 104.

In Step 106, when the user needs to re-access the portable wireless router via the wireless network card, the portable wireless router in the sleep mode needs to be woken up by the user by manually pressing keys to access successfully.

In Step 107, it is to enter into the normal mode, and the re-access is successful.

With the abovementioned existing design, the power consumption is relatively high in the normal mode, which reduces the battery life of the portable wireless router, and the battery life is short, and for this, the sleep mode is introduced. After entering into the Sleep mode, the wifi is powered off, and the wireless router maintains low-power operation, for example, the current of portable wireless router products from Huawei and other mainstream manufacturers is about 10mA in the sleep mode.

However, in the sleep mode, the terminal still needs to lmonitor the channel and maintain the network attachment and update, in some scenes, especially in cases that the mobile network environment is not good, in order to maintaining the RF transmit power, the power consumption is far beyond the ideal value, which is one of the important reasons about why in the actual use, the actual standby time is much less than the theoretical standby time. Moreover, after the sleep mechanism is introduced, although the battery life is greatly increased, it brings some inconveniences to the user for using. If the portable wireless router is just in the sleep mode when the user accesses, because the wifi is powered off at this time, the wireless network card is unable to find and access wifi signals, therefore the user needs to wake up the portable wireless router through manual operation, for example, only after the portable wireless router is woken up by manually key-pressing, can the user access the wifi.

In summary, the current portable wireless routing system automatically enters into the sleep mode to achieve the purpose of reducing power consumption and increasing the battery life after being in the state of no user access for a certain duration. However when the user needs to access a portable wireless router in the sleep state, the user first needs to manually press the keys to wake up the portable wireless router in order to access the wifi, it can be seen that, using the existing technical solution has the following problems:
1. The portable wireless router automatically sleeps based on the usage. A terminal in the sleep mode needs to monitor the channel in order to maintain the mobile network attachment and updates since the firmware body is still running. This still needs to consume energy, in practical usage, and especially in some cases that the mobile network environment is not good, the power consumption is still relatively high.
2. The wakeup of the portable wireless router in the sleep mode is totally dependent on human intervention, and at each time it is always required to manually pressing the key to wake up the router, which on one hand is inconvenient for the user to use, and on the other hand is easy to wear the keys, cause physical damages on the keys, and reduce their service life. It is especially prominent in the following usage scenarios, for example, due to specific needs, the user needs to use the router discontinuously, but if the time interval exceeds a triggering time for entering into sleep, it leads to that the user needs to manually press the keys repeatedly to wake up the router.

The features of the preamble of the independent claims are known from US2007/066273A1. Related technologies are also known from WO2011/094081A1 or "Dynamic Setup of HNBs for Energy Savings and Interference Reduction" of SHENZHEN C, 3RD GENERATION PARTNERSHIP PROJECT (3GPP); TECHNICALSPECIFICATION GROUP (TSG) RADIO ACCESS NETWORK (RAN); WORKINGGROUP 3 (WG3), XX, XX, vol.R3-080658, XP003023429.

### Summary of the Invention

In view of this, the main purpose of the embodiment of the present invention is to provide a network card device, routing device, system and method for realizing dynamic sleep and wakeup as defined in the independent claims, to reduce power consumption and increase battery life, and manually key-pressing is not required for waking up.

To achieve the abovementioned purpose, the technical solution of the present invention is achieved as:
a network card device for realizing dynamic sleep and wakeup, wherein the network card device is configured to initiate searching and accessing for wifi signals, and determine that a routing device has entered into a sleep mode or a quasi-power-off mode when no wifi signal of the routing device is found, and send an automatic wake-up/power-on command to the routing device.

Wherein, the network card device specifically comprises: a network card master control module and a transmission module; wherein,
the network card master control module is configured to initiate searching and accessing for wifi signals, and call and power on the transmission module when determining that the routing device has entered into the sleep mode or the quasi-power-off mode;
the transmission module is configured to transmit the automatic wake-up/power-on command after called and powered on by the network card master control module.

Wherein, the network card master control module is further configured to call and power off the transmission module after the routing device is woken up from the sleep mode to return to a normal mode or is recovered from the quasi-power-off mode to the normal mode and successfully accesses the wifi signals;
the transmission module is further configured to be called and powered off by the network card master control module.

A routing device for realizing dynamic sleep and wakeup, wherein the routing device is configured to select to enter into a sleep mode or a quasi-power-off mode according to an actual user access and traffic situation; when a user requests to access the routing device which has entered into the sleep mode or the quasi-power-off mode, receive an automatic wake-up/power-on command sent by a network card device, to be woken up from the sleep mode to return to a normal mode, or be powered on and recovered from the quasi-power-off mode to return to the normal mode.

Wherein, the routing device specifically comprises: a master control module, and a reception processing module; wherein,
the master control module is configured to call and power on the reception processing module in a case that the routing device is in the sleep mode or the quasi-power-off mode; after the reception processing module receives the automatic wake-up/power-on command, wake up the routing device from the sleep mode to return to the normal mode, or power on and recover the routing device from the quasi-power-off mode to return to the normal mode;
the reception processing module is configured to receive the automatic wake-up/power-on command transmitted by a transmission module after called and powered on by the master control module.

Wherein, the master control module is further configured to call and power off the reception processing module after the routing device returns to the normal mode;
the reception processing module is further configured to be called and powered off by the master control module.

Wherein, the master control module is further configured to perform inactivity detection regularly according to a predetermined time, and control the routing device to enter into the sleep mode or the quasi-power-off mode.

A system for implementing dynamic sleep and wakeup, wherein the system comprises: a network card device, and a routing device; wherein,
the network card device is configured to initiate searching and accessing for wifi signals, determine that the routing device has entered into a sleep mode or a quasi-power-off mode when no wifi signals of the routing device is found, and send an automatic wake-up/power-on command to the routing device;
the routing device is configured to select to enter into the sleep mode or the quasi-power-off mode according to an actual user access and traffic situation; when a user requests to access a routing device which has entered into the sleep mode or the quasi-power-off mode, receive the automatic wake-up/power-on command sent by the network card device, and to be woken up from the sleep mode to return to a normal mode or be powered on and recovered from the quasi-power-off mode to return to the normal mode.

Wherein the network card device specifically comprises: a network card master control module, a transmit module; the routing device specifically comprises: a master control module, and a reception processing module; wherein,
the network card master control module is configured to initiate searching and accessing for the wifi signals, and call and power on the transmission module when determining that the routing device has entered into the sleep mode or the quasi-power-off mode;
the transmission module is configured to transmit the automatic wake-up/power-on command after called and powered on by the network card master control module;
the master control module is configured to call and power on the reception processing module in a case that the routing device is in the sleep mode or the quasi-power-off mode; after the reception processing module receives the automatic wake-up/power-on command, wake up the routing device from the sleep mode to return to the normal mode, or power on and recover the routing device from the quasi-power-off mode to return to the normal mode;
the reception processing module is configured to receive the automatic wake-up/power-on command transmitted by the transmission module after called and powered on by the master control module.

Wherein, the network card master control module is further configured to call and power off the transmission module after the routing device is woken up from the sleep mode to return to the normal mode or is recovered from the quasi-power-off mode to the normal mode to successfully access the wifi signals;
the transmission module is further configured to be called and powered off by the network card master control module;
the master control module is further configured to call and power off the reception processing module after the routing device returns to the normal mode;
the reception processing module is further configured to be called and powered off by the master control module.

A method for implementing dynamic sleep and wakeup, wherein the method comprises:
selecting to enter into a sleep mode or a quasi-power-off mode according to an actual user access and traffic situation;
when a user requests to access a routing device which has entered into the sleep mode or the quasi-power-off mode, the routing device being woken up from the sleep mode to return to a normal mode or being powered on and recovered from the quasi-power-off mode to return to the normal mode according to an automatic wake-up/power-on command.

Wherein, selecting the sleep mode or the quasi-power-off mode according to the actual user access and traffic situation specially comprises:
when there is no user access, or there is user access but there is no traffic, determining that the routing device is in an inactivity state;
when a duration of the inactivity state matches with a preset first detection time T1, selecting to enter into the sleep mode;
when a duration of the sleep mode matches with a preset second detection time T2, selecting to enter into the quasi-power-off mode.

Wherein, returning to the normal mode based on the user request and according to the automatic wake-up/power-on command specifically comprises:
a network card device searching for and detecting wifi signals of the routing device, if no wifi signal is detected, sending the automatic wake-up/power-on command to the routing device;
the routing device being woken up from the sleep mode to return to the normal mode or being powered on and recovered from the quasi-power-off mode to return to the normal mode according to the received automatic wake-up/power-on command.

In the present invention, selecting to enter into the sleep mode or the quasi-power-off mode is based on the actual user access and traffic situation; when a user requests to access a routing device which has entered into the sleep mode or the quasi-power-off mode, according to the automatic wake-up/power-on command, the routing device is woken up from the sleep mode to return to the normal mode, or is powered on and recovered from the quasi-power-off mode to return to the normal mode.

In the present invention, in the case that there is no user access or no actual usage traffic, the wireless routing device can select to enter into the sleep mode or the quasi-power-off mode to further reduce power consumption and increase battery life; when the user re-accesses and uses the wireless routing device, the device is automatically woken up or powered on according to the automatic wake-up/power-on command, and no user intervention user is required, thereby improving convenience of user operation.

### Brief Description of the Drawings

FIG. 1 is a schematic diagram of mode transition and access of a conventional portable wireless router;
FIG. 2 is a schematic diagram of a composition structure of a system in accordance with an embodiment of the present invention;
FIG. 3 is a schematic diagram of a composition structure of a system comprising a routing device sub-module in accordance with an embodiment of the present invention;
FIG. 4 is a flow chart of a method corresponding to the system in accordance with an embodiment of the present invention.

### Preferred Embodiments of the Invention

In the embodiment of the present invention, according to the actual user access and traffic situation, it is to select to enter the sleep mode or the quasi-power-off mode; when a user requests to access a routing device which has entered into the sleep mode or the quasi-power-off mode, according to the automatic wake-up/power-on command, the routing device is woken up from the sleep mode to return to the normal mode or is powered on and recovered from the quasi-power-off mode to return to the normal mode.

The embodiment of the present invention mainly comprises the following contents:
aiming to the problem in the prior art that, after the introduction of sleep mechanism, the portable wireless router automatically enters into the sleep mode and still has high power consumption after it is in a no user access state for a certain duration, and from the aspect of further reducing power consumption and increasing the battery life, the embodiment of the present invention further introduces the quasi-power-off mechanism, namely, the portable wireless routing device in accordance with the embodiment of the present invention first enters into the sleep mode based on the actual user access and traffic situation, and then enters into the quasi-power-off mode from the sleep mode. That is, although the sleep mode in accordance with the embodiment of the present invention is the same as that of the conventional portable wireless router in design and realization, but the difference is, after the embodiment of the present invention introduces the quasi-power-off mode, the sleep mode exists as a transition mode of the normal mode and the introduced quasi-power-off mode, moreover, just because of the presence of the sleep mode, it is possible to switch more quickly to return to the normal mode. After entering into the quasi-power-off mode, the portable wireless routing device is powered off and there is no power consumption, it can be seen that, after the embodiment of the present invention introduces the quasi-power-off mode, there are two selectable modes, the sleep mode and the quasi-power-off mode which further reduces power consumption, to select, and different from the prior art in which there is only the sleep mode and the manual wakeup is required, with the embodiment of the present invention, power consumption can be significantly reduced, and due to the reduction in power consumption, the battery life of the portable wireless routing device can be greatly increased.

Aiming to the problem in the prior art that, after the introduction of the sleep mechanism, when the user needs to re-access, because it is in the sleep mode, the portable wireless router can only be accessed after woken up through manually key-pressing, and from the perspective of achieving automatic and convenient operation to facilitate using by the user, reduce physical wearing and increase the life of the portable wireless router, the embodiment of the present invention introduces the automatic wakeup mechanism to replace the manual human intervention mechanism. Since the wireless routing device is already in the sleep mode or further in the quasi-power-off mode, therefore, when a user requests again to re-access the portable wireless routing device, the wireless network card device first needs to search and detect, and try to access the wifi of the target portable wireless routing device, if no wifi signal is detected, then it is to power on the transmission module in the wireless network card device, and send the automatic wake-up/power-on command in the format of wireless signal to the reception processing module located in the wireless routing device, and after the reception processing module receives the automatic wake-up/power-on command, the wireless routing device is woken up from the sleep mode to return to the normal mode, or is recovered from the quasi-power-off mode to the normal mode, meanwhile, the wireless network card device continues to search the wireless routing device until wifi signals are found and the access is successful.

Specifically, the wireless routing system in accordance with the embodiment of the present invention comprises a wireless network card device and a wireless routing device. Wherein, besides of essential components of the existing wireless network card device, the wireless network card device further comprises the newly-added transmission module and network card master control module, and besides of the essential components of the existing portable wireless router, the wireless routing device further comprises the newly-added reception processing module and master control module.

When there is no any user access or there is user access but there is no any traffic, the wireless routing device will be determined as in the inactivity state (the determination is completed by the master control module, or further completed by the inactivity detection sub-module in the master control module).

After the wireless routing device remains in the inactivity state for the specific duration T1 (such as 10 minutes), it first enters into the sleep mode. It should be noted that, although there is still the sleep mode in the embodiments of the present invention, it is not used for monitoring the channel or maintaining the network attachment and update, but for providing a transition from the normal mode to the quasi-power-off mode, moreover, it can be more quickly switched back to the normal mode from the sleep mode. After the wireless routing device remains in the sleep mode for a predetermined duration T2 (such as 15 minutes), it enters into the quasi-power-off mode. In the quasi-power-off mode, the wireless routing device is powered off.

After entering into the sleep mode, the wireless routing device is in the normal sleep mode, and maintains the mobile network attachment and update, and channel monitoring. After entering into the sleep mode, the reception processing module in the wireless routing device starts to run.

After entering into the quasi-power-off mode, the wireless routing device is powered off. After entering into the quasi-power-off mode, except that the reception processing module is still running, all the other modules in the wireless routing device are powered off, thereby reducing the power consumption and increasing the battery life, its principle is that, when in the quasi-power-off mode, since the wireless routing device is completely in the power-off state, there is no need to keep the firmware program running, or maintain the mobile network attachment and update, or monitor the mobile network channel, thereby reducing the power consumption and improving the battery life.

Herein, the reception processing module can use discontinuous reception technology to monitor wireless signals transmitted by the transmission module in the wireless network card device.

When a user requests to access the wireless routing device which is in the sleep or quasi-power-off mode, first the network card master control module in the wireless network card device is powered on to search for and detect wifi signals of the wireless router, if the network card master control module cannot detect any wifi signals, the wireless router is considered to be currently in the sleep mode or the quasi-power-off mode, therefore, the network card master control module powers on the transmission module, and the transmission module transmits wireless signals in which an automatic wake-up/power-on command is encapsulated to the reception processing module running in the wireless router.

When the wireless routing device is in the sleep mode or the quasi-power-off mode, it can receive the automatic wake-up/power-on command, after the reception processing module receives the automatic wake-up/power-on command and initiates a wakeup or power-on request to the master control module in the wireless routing device, the wireless routing device is woken up from the sleep mode to return to the normal mode, or is recovered from the quasi-power-off mode to the normal mode, after it is woken up or powered on successfully, the reception processing module is powered off by the master control module. In this process, the wireless network card device will continue searching for wireless signals of the wireless router, until the wifi signals are found and the access is successful, or the access times out. Subsequently, the transmission module in the wireless network card devices is powered off by the network card master control module.

In summary, the use of the network card and routing device in accordance with the embodiment of the present invention as well as the system formed thereof, and the method operation process corresponding to the system can achieve the following advantages:
1. the wireless routing device can not only enter into the sleep mode and reduce power consumption based on usage, but also automatically enter into the quasi-power-off mode to further reduce power consumption. In an actual use, especially in some poor local mobile network environments, the power-saving effect of this technology implementation is particularly evident.
2. when a user needs to re-access and use the wifi, the wakeup or power-on of the wireless routing device is automatically controlled, and no human operation is needed, thereby enhancing the convenience and ease of user operation. For example, one scenario is that, the user may only need to occasionally use the wifi, if the existing portable wireless routing system is used, every wakeup requires the user's man-made operation. Using the wireless router system in accordance with the embodiment of the present invention makes the system itself wake up or power on, and no manual operation of the user is needed, thereby improving the experience of the user operation.
3. After entering into the quasi-power-off mode, except a separate reception processing module which is running, the other parts of the wireless routing device are powered off completely, thereby preventing the wireless routing device from being powered on and running for a long time, and improving the performance and stability of the device.

In the following, the implementation of the technical solution will be described in further detail with reference to the accompanying drawings.

Taking the wireless network card device based on the 3G network, the wireless routing device, and the wireless routing system consisting thereof as an example to describe, of course, the present embodiment only takes the portable 3G wireless router for example, but is not limited to portable wireless routers in other non-3G network modes.

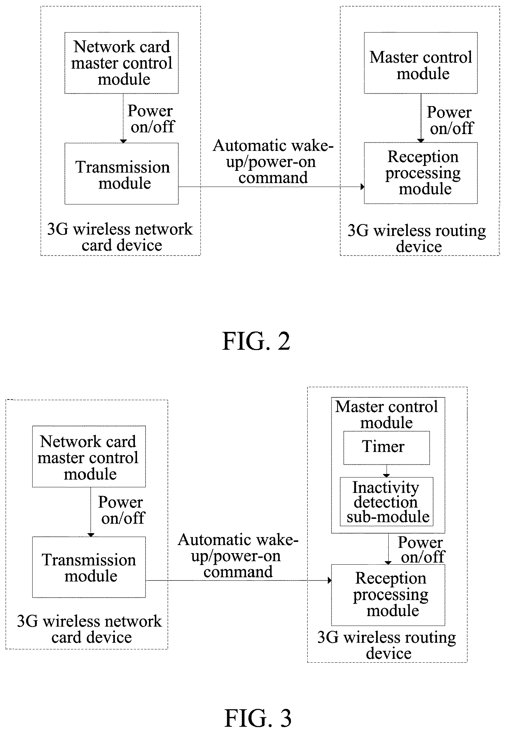

As shown in FIG. 2, the 3G wireless network card device comprises: a network card master control module and a transmission module.

Wherein, the network card master control module can run after the network card is powered on, and similar to the conventional wireless network card function module, the network card master control module is configured to initiate searching and accessing for wifi signals. If the wifi signals of the target device 3G wireless router are not found, the 3G wireless routing device is considered to be in the sleep mode or the quasi-power-off mode, therefore, the network card master control module powers on the transmission module, and sends an automatic wake-up/power-on command to the reception processing module of the 3G wireless routing device. In this process, the network card master control module will continue searching for wifi signals of the target 3G wireless routing device, until the wifi access is successful or times out.

The transmission module is configured to, after being called or powered on by the network card master control module, transmit an automatic wake-up/power-on command which is configured for waking up or powering on from the sleep mode at the request of the network card master control module. The transmission module continues to transmit wireless signals such as continuous pulse waves at a certain frequency (such as 2.4GHz, the reason for 2.4GHz being taken into consideration is that the existing wireless router, wireless mouse, and other devices use this frequency), until the wireless network card device successfully access the wifi signals of the target 3G wireless routing device or the wifi signal access times out, then the transmission module is powered off.

As shown in FIG. 2, the 3G wireless routing device comprises: a master control module and a reception processing module.

Wherein, the reception processing module comprises a signal receiving device to receive wireless signals (the wireless signals comprise the automatic wake-up/power-on command) transmitted by the transmission module in the wireless network card device, thereby enabling the operation of waking up or powering on the 3G wireless routing device. When the 3G wireless routing device is in the normal mode, the reception processing module is powered off, when the 3G wireless routing device is in the sleep mode or the quasi-power-off mode, the reception processing module is called and powered on by the master control module. After the reception processing module receives an automatic wake-up/power-on command sent to it, it performs a wake-up or power-on operation on the 3G wireless routing device. Herein, the reception processing module is used to perform a wakeup operation on the 3G wireless routing device, a key similar to the simulation can be used and configured to implement a wakeup or power-on operation. Since the reception processing module still needs to consume the battery power, the reception processing module can use the discontinuous-reception technology to receive the wireless signals transmitted by the transmission module in order to further reduce the power consumption and improve the battery life. Wherein, a simulated key-press example which uses the reception processing module to implement a wake-up operation on the 3G wireless routing device is specifically: for example, the reception processing module sends a signal to the power management integrated circuit (PMIC) to let the PMIC trigger a power-on event. Because what is ultimately produced by the key-press operation is a change of the level, the reception processing module inputs it to the PMIC via the change in the simulated level, so as to achieve the simulation of the key-press action.

The master control module is configured to, in the case that the 3G wireless routing device is in the sleep mode or the quasi-power-off mode, call and power on the reception processing module; after the reception processing module receives an automatic wake-up/power-on command from the transmission module, wake up the wireless routing device from the sleep mode to return to the normal mode, or power on and recover the wireless routing device from the quasi-power-off mode to the normal mode, while call and power off the reception processing module. The master control module is further configured to perform an inactivity detection regularly according to the predetermined time (such as the specific durations T1 and T2), and control the wireless routing device to enter into the sleep mode or the quasi-power-off mode. Herein, the detection executed herein is specifically as follows: in the case that the specific durations (T1, T2) are pre-configured, detecting the duration of the inactivity state and the duration of the sleep mode regularly according to the set T1 and T2, and matching with the set T1 and T2, if the matching is successful, then entering into a preset selectable mode (entering into the sleep mode when the T1 matching is satisfied, and entering into the quasi-power-off mode when the T2 matching is satisfied).

Furthermore, as shown in FIG. 3, the master control module comprises: an inactivity detection sub-module and a timer. Wherein, for the inactivity detection sub-module, when the 3G wireless routing device monitors and performs statistic on the usage, the inactivity detection sub-module is called regularly to judge whether the current state is the activity state or the inactivity state. If in the detection period, the 3G wireless routing device remains in the inactivity state, it is determined that the transition prerequisite of the sleep/quasi-power-off mode is met, and it is to report to the master control module. For the timer, the 3G wireless routing device powers on the timer, the user can pre-configure the duration (such as T1, T2) of the timer, and powers on the timer to call the inactivity detection sub-module regularly to detect whether it is currently in activity or inactivity.

As shown in FIG. 2 or 3, the 3G wireless routing system consists of the 3G wireless network card device and the 3G wireless routing device, while the description of the 3G wireless network card device and the 3G wireless routing device will not be repeated here.

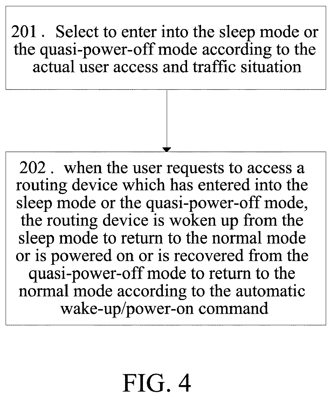

As shown in FIG. 4, the method process corresponding to the 3G wireless routing system comprises the following steps:
In step 201, it is to select to enter into the sleep mode or the quasi-power-off mode according to the actual user access and traffic situation.

In Step 202, when the user requests to access a routing device which has entered into the sleep mode or the quasi-power-off mode, the routing device is woken up from the sleep mode to return to the normal mode or is powered on or is recovered from the quasi-power-off mode to return to the normal mode according to the automatic wake-up/power-on command.

It should be noted here that: with the method process corresponding to the system in accordance with the embodiment of the present invention, the firmware system of the 3G wireless routing system automatically monitors the system activity, when the system is in the normal mode - inactivity state for a certain duration, it enters into the sleep mode; when the system is in the sleep mode - inactivity state after a certain duration, it enters into the quasi-power-off mode. When the 3G wireless routing system is in the sleep or quasi-power-off mode, and the wireless network card device tries to access the wifi, it will fail and the target wifi signals cannot be found, the wireless network card device powers on the transmission module, and sends signals to wake up the target portable 3G wireless routing device. In other words, the 3G wireless routing device selects to enter into the sleep mode or the quasi-power-off mode according to the user access or traffic situation in the actual use, the wireless network card device automatically wakes up or powers on the 3G wireless routing device again according to the operation of the user accessing the wifi signals, therefore the 3G wireless routing device can dynamically and accurately achieve the sleep (standby) and quasi-power-off, avoiding the power consumption when the device is not be used for a long time and is in the sleep mode. The "automation" of the device which has entered into the sleep/ quasi-power-off mode being woken up and entering into the normal mode removes the manual operations by the user and enhances the convenience of user operation.

Herein, the operation process performed by the 3G wireless network card device in the 3G wireless routing system comprises the following contents:
a1. the user powers on the 3G wireless network card device and tries to access the wifi signals.
a2. the 3G wireless network card device searches for the target wifi signals, if the target wifi signals are found, the access is successful, it is to proceed to step a5; if the target wifi signals cannot be found, the target 3G wireless routing device is considered to be in the sleep mode or the quasi-power-off state, and the transmission module is powered on.
a3. the transmission module transmits wireless signals to the target 3G wireless routing device.
a4. the 3G wireless network card device keeps trying until the wifi access is successful, and the transmission module is powered off. Otherwise the access times out and the transmission module is powered off.
a5. the process ends.

Herein, the operation process performed by the 3G wireless routing device in the 3G wireless routing system comprises the following contents:
b1. after the 3G wireless routing device is powered on, it first enters into the normal mode.
b2. the master control module detects whether the system is in activity or inactivity.
b3. if the master control module detects that the 3G wireless routing device is always in the inactivity state in the specific duration T1, the reception processing module is powered on and the 3G wireless routing device enters into the sleep mode; otherwise it is to return back to step b1. In the sleep mode, the 3G wireless routing device needs to continuously monitor the channel and maintain the mobile network attachment and update.
b4. if the 3G wireless routing device receives an automatic wake-up command sent by the 3G wireless network card device in the sleep mode, it is to proceed to step b7, otherwise the routing device remains in the sleep state.
b5. if the duration of the sleep mode is longer than the specific duration T2, then the 3G wireless routing device enters into the quasi-power-off mode. After entering into the quasi-power-off mode, the reception processing module keeps running, and the 3G wireless routing device is powered off.
b6. in the quasi-power-off mode, if the 3G wireless routing device receives an automatic power-on command sent by the 3G wireless network card device, it is to proceed to step b7, otherwise the routing device remains in the quasi-power-off mode.
b7. the reception processing module is powered off, and the 3G wireless routing device enters into the normal mode.

The above description is only for preferred embodiments of the present invention which are defined in the appended claims.

### Industrial Applicability

In the embodiment of the present invention, it is to select to enter into the sleep mode or the quasi-power-off mode according to the actual user access and traffic situation; when a user requests to access a routing device which has entered into the sleep mode or the quasi-power-off mode, according to the automatic wake-up/power-on command, the routing device is woken up from the sleep mode to return to the normal mode, or is powered on and recovered from the quasi-power-off mode to return to the normal mode. With the embodiment of the present invention, in the case that there is no user access or no actual usage traffic, the wireless routing device can select to enter into the sleep mode or the quasi-power-off mode to further reduce power consumption and increase battery life; when the user re-accesses and uses the wireless routing device, the device is automatically woken up or powered on according to the automatic wake-up/power-on command, and no user intervention is required, thereby improving convenience of user operation.

## Claims

1. A routing device for realizing dynamic sleep and wakeup, wherein
the routing device comprises: a master control module and a reception processing module,
the master control module is configured to select to enter into a sleep mode or a quasi-power-off mode according to an actual user access and traffic situation by: when the routing device remains in an inactivity state for a preset first detection time T1, selecting to enter into a sleep mode, wherein when there is no user access, or there is user access but there is no traffic, the routing device is determined in the inactivity state; when the routing device remains in the sleep mode for a preset second detection time T2, selecting to enter into a quasi-power-off mode; power on the reception processing module in a case that the routing device is in the sleep mode or the quasi-power-off mode; when a user requests to access the routing device which has entered into the sleep mode or the quasi-power-off mode, receive an automatic wake-up/power-on command sent by a network card device; after the reception processing module receives the automatic wake-up/power-on command, wake up the routing device from the sleep mode to return to the normal mode, or power on and recover the routing device from the quasi-power-off mode to return to the normal mode;
the reception processing module is configured to receive the automatic wake-up/power-on command transmitted by a transmission module of a network card device after powered on by the master control module;
in the sleep mode, a firmware body of the routing device is still running, the routing device monitors a channel in order to maintain a mobile network attachment and updates, and the reception processing module of the routing device is running;
in the quasi-power-off mode, the routing device doesn't keep the firmware body running, doesn't maintain the mobile network attachment and updates, and doesn't monitor the channel, the reception processing module monitors wireless signals transmitted by the transmission module of the network card device.

2. The device of claim 1, wherein, the master control module is further configured to power off the reception processing module after the routing device returns to the normal mode;
the reception processing module is further configured to be powered off by the master control module.

3. A system for implementing dynamic sleep and wakeup, wherein the system comprises: a network card device and a routing device; wherein the network card device comprises: a network card master control module and a transmit module, and the routing device comprises: a master control module and a reception processing module;
wherein the network card master control module is configured to initiate searching and accessing for wifi signals, determine, when no wifi signal of a routing device is found, that the routing device has entered into a sleep mode or a quasi-power-off mode; initiate searching and accessing for wifi signals, and power on the transmission module when determining that the routing device has entered into the sleep mode or the quasi-power-off mode;
the transmission module is configured to send an automatic wake-up/power-on command to the routing device after powered on by the network card master control module;
the master control module is configured to select to enter into the sleep mode or the quasi-power-off mode according to an actual user access and traffic situation by: when the routing device remains in an inactivity state for a preset first detection time T1, selecting to enter into a sleep mode, wherein when there is no user access, or there is user access but there is no traffic, the routing device is determined in the inactivity state; when the routing device remains in the sleep mode for a preset second detection time T2, selecting to enter into a quasi-power-off mode; power on the reception processing module in a case that the routing device is in the sleep mode or the quasi-power-off mode; when a user requests to access a routing device which has entered into the sleep mode or the quasi-power-off mode, receive the automatic wake-up/power-on command sent by the network card device; after the reception processing module receives the automatic wake-up/power-on command, wake up the routing device from the sleep mode to return to the normal mode, or power on and recover the routing device from the quasi-power-off mode to return to the normal mode;
the reception processing module is configured to receive the automatic wake-up/power-on command transmitted by the transmission module after powered on by the master control module;
in the sleep mode, a firmware body of the routing device is still running, the routing device monitors a channel in order to maintain a mobile network attachment and updates, and the reception processing module of the routing device is running;
in the quasi-power-off mode, the routing device doesn't keep the firmware body running, doesn't maintain the mobile network attachment and updates, and doesn't monitor the channel, the reception processing module monitors wireless signals transmitted by the transmission module of the network card device.

4. The system of claim 3, wherein, the network card master control module is further configured to power off the transmission module after the routing device is woken up from the sleep mode to return to the normal mode or is recovered from the quasi-power-off mode to the normal mode to successfully access the wifi signals;
the transmission module is further configured to be powered off by the network card master control module;
the master control module is further configured to power off the reception processing module after the routing device returns to the normal mode;
the reception processing module is further configured to be powered off by the master control module.

5. A method for implementing dynamic sleep and wakeup, wherein the method comprises:
when there is no user access, or there is user access but there is no traffic, a routing device determining that the routing device is in an inactivity state;
when the routing device remains in the inactivity state for a preset first detection time T1, the routing device selecting (201) to enter into a sleep mode;
when the routing device remains in the sleep mode for a preset second detection time T2, the routing device selecting (201) to enter into the quasi-power-off mode;
a network card device searching for and detecting wifi signals of the routing device, if no wifi signal is detected, sending an automatic wake-up/power-on command to the routing device;
the routing device being (202) woken up from the sleep mode to return to the normal mode or being powered on and recovered from the quasi-power-off mode to return to the normal mode according to the received automatic wake-up/power-on command;
in the sleep mode, a firmware body of the routing device is still running, the routing device monitors a channel in order to maintain a mobile network attachment and updates, and a reception processing module of the routing device is running;
in the quasi-power-off mode, the routing device doesn't keep the firmware body running, doesn't maintain the mobile network attachment and updates, and doesn't monitor the channel, the reception processing module monitors wireless signals transmitted by the network card device.

## Patentansprüche

1. Routingvorrichtung zum Realisieren von dynamischem Schlafen und Aufwecken, wobei
die Routingvorrichtung umfasst: ein Mastersteuerungsmodul und ein Empfangsverarbeitungsmodul, wobei das Mastersteuerungsmodul konfiguriert ist, um auszuwählen, in einen Schlafmodus oder einen Quasi-Power-Off-Modus gemäß einer tatsächlichen Anwenderzugriffs- und Verkehrssituation einzutreten mittels: wenn die Routingvorrichtung in einem Inaktivitätszustand für eine vorbestimmte erste Erfassungszeit T1 bleibt, auszuwählen, in einen Schlafmodus einzutreten, wobei, wenn kein Anwenderzugriff besteht, oder Anwenderzugriff besteht, aber kein Verkehr besteht, die Routingvorrichtung in einem Inaktivitätszustand festgelegt ist; wenn die Routingvorrichtung in dem Schlafmodus für eine vorbestimmte zweite Erfassungszeit T2 bleibt, auszuwählen, in einen Quasi-Ausschaltmodul einzutreten; Einschalten des Empfangsverarbeitungsmoduls in einem Fall, in dem die Routingvorrichtung in dem Schlafmodus oder dem Quasi-Ausschaltmodus ist; wenn ein Anwender anfordert, auf die Routingvorrichtung zuzugreifen, die in den Schlafmodus oder den Quasi-Ausschaltmodus eingetreten ist, Empfangen eines automatischen Aufweck/Einschaltbefehls, der von einer Netzwerkkartenvorrichtung gesendet wird; nachdem das Empfangsverarbeitungsmodul den automatischen Aufweck/Einschaltbefehl empfängt, Aufwecken der Routingvorrichtung von dem Schlafmodus, um in den normalen Modus zurückzukehren, oder Einschalten und Wiedergewinnen der Routingvorrichtung von dem Quasi-Ausschaltmodus, um in den normalen Modus zurückzukehren;
wobei das Empfangsverarbeitungsmodul konfiguriert ist, um den automatischen Aufweck/Einschaltbefehl zu empfangen, der von einem Sendemodul einer Netzwerkkartenvorrichtung nach dem Einschalten von dem Mastersteuerungsmodul gesendet wird;
in dem Schlafmodus, ein Firmwarenkörper der Routingvorrichtung immer noch läuft, die Routingvorrichtung einen Kanal überwacht, um einen mobilen Netzwerkanhang und Aktualisierungen aufrecht zu erhalten, und das Empfangsverarbeitungsmodul der Routingvorrichtung läuft;
in dem Quasi-Ausschaltmodus, die Routingvorrichtung den Firmwarenkörper nicht laufen lässt, den mobilen Netzwerkanhang und Aktualisierungen nicht aufrecht erhält, und den Kanal nicht überwacht, das Empfangsverarbeitungsmodul drahtlose Signale überwacht, die von dem Sendemodul der Netzwerkkartenvorrichtung gesendet werden.

2. Vorrichtung nach Anspruch 1, wobei das Mastersteuerungsmodul weiter konfiguriert ist, um das Empfangsverarbeitungsmodul auszuschalten, nachdem die Routingvorrichtung in den normalen Modus zurückkehrt;
das Empfangsverarbeitungsmodul weiter konfiguriert ist, um von dem Mastersteuerungsmodul ausgeschaltet zu werden.

3. System zum Umsetzen von dynamischem Schlafen und Aufwecken, wobei das System umfasst: eine Netzwerkkartenvorrichtung und eine Routingvorrichtung; wobei die Netzwerkkartenvorrichtung umfasst: ein Netzwerkkarten-Mastersteuerungsmodul und ein Sendemodul, und die Routingvorrichtung umfasst: ein Mastersteuerungsmodul und ein Empfangsverarbeitungsmodul;
wobei das Netzwerkkarten-Mastersteuerungsmodul konfiguriert ist, um nach WiFi-Signalen zu suchen und auf sie zuzugreifen, festzulegen, wenn kein WiFi-Signal einer Routingvorrichtung gefunden wird, dass die Routingvorrichtung in einen Schlafmodus oder einen Quasi-Ausschaltmodus eingetreten ist; nach WiFi-Signal zu suchen und auf sie zuzugreifen, und das Sendemodul einzuschalten, wenn festgelegt wird, dass die Routingvorrichtung in den Schlafmodus oder den Quasi-Ausschaltmodus eingetreten ist;
das Sendemodul konfiguriert ist, um einen automatischen Aufweck/Einschaltbefehl an die Routingvorrichtung zu senden, nachdem sie von dem NetzwerkkartenMastersteuerungsmodul eingeschaltet wurde;
das Mastersteuerungsmodul konfiguriert ist, um auszuwählen, in einen Schlafmodus oder den Quasi-Ausschaltmodus gemäß einem tatsächlichen Anwenderzugriffs und einer Verkehrssituation einzutreten mittels: wenn die Routingvorrichtung in einem Inaktivitätszustand für eine vorbestimmte erste Erfassungszeit T1 bleibt, auszuwählen, in einen Schlafmodus einzutreten, wobei, wenn kein Anwenderzugriff besteht, oder Anwenderzugriff besteht, aber kein Verkehr besteht, die Routingvorrichtung in dem Inaktivitätszustand festgelegt ist; wenn die Routingvorrichtung in dem Schlafmodus für eine vorbestimmte zweite Erfassungszeit T2 bleibt, auszuwählen, in einen Quasi-Ausschaltmodul einzutreten; Einschalten des Empfangsverarbeitungsmoduls in einem Fall, in dem die Routingvorrichtung in dem Schlafmodus oder dem Quasi-Ausschaltmodus ist; wenn ein Anwender anfordert, auf die Routingvorrichtung zuzugreifen, die in den Schlafmodus oder den Quasi-Ausschaltmodus eingetreten ist, Empfangen eines automatischen Aufweck/Einschaltbefehls, der von einer Netzwerkkartenvorrichtung gesendet wird; nachdem das Empfangsverarbeitungsmodul den automatischen Aufweck/Einschaltbefehl empfängt, Aufwecken der Routingvorrichtung von dem Schlafmodus, um in den normalen Modus zurückzukehren, oder Einschalten und Wiedergewinnen der Routingvorrichtung von dem Quasi-Ausschaltmodus, um in den normalen Modus zurückzukehren;
wobei das Empfangsverarbeitungsmodul konfiguriert ist, um den automatischen Aufweck/Einschaltbefehl zu empfangen, der von einem Sendemodul einer Netzwerkkartenvorrichtung nach dem Einschalten von dem Mastersteuerungsmodul gesendet wird;
in dem Schlafmodus, ein Firmwarenkörper der Routingvorrichtung immer noch läuft, die Routingvorrichtung einen Kanal überwacht, um einen mobilen Netzwerkanhang und Aktualisierungen aufrecht zu erhalten, und das Empfangsverarbeitungsmodul der Routingvorrichtung läuft;
in dem Quasi-Ausschaltmodus, die Routingvorrichtung den Firmwarenkörper nicht laufen lässt, den mobilen Netzwerkanhang und Aktualisierungen nicht aufrecht erhält, und den Kanal nicht überwacht, das Empfangsverarbeitungsmodul drahtlose Signale überwacht, die von dem Sendemodul der Netzwerkkartenvorrichtung gesendet werden.

4. System nach Anspruch 3, wobei das Netzwerkkarten-Mastersteuerungsmodul weiter konfiguriert ist, um das Übertragungsmodul auszuschalten, nachdem die Routingvorrichtung aus dem Schlafmodus aufgeweckt wurde, um in das normale Modul zurückzukehren oder von dem Quasi-Ausschaltmodus zu dem normalen Modus wiedergewonnen wird, um erfolgreich auf die WiFi-Signale zu greifen;
das Sendemodul weiter konfiguriert ist, um von dem Netzwerkkarten-Mastersteuerungsmodul ausgeschaltet zu werden;
das Mastersteuerungsmodul weiter konfiguriert ist, um das Empfangsverarbeitungsmodul auszuschalten, nachdem die Routingvorrichtung in den normalen Modus zurückkehrt;
das Empfangsverarbeitungsmodul weiter konfiguriert ist, um von dem Mastersteuerungsmodul ausgeschaltet zu werden.

5. Verfahren zum Umsetzen von dynamischem Schlafen und Aufwecken, wobei das Verfahren umfasst:
wenn kein Anwenderzugriff besteht, oder Anwenderzugriff besteht, aber kein Verkehr besteht, eine Routingvorrichtung festlegt, dass die Routingvorrichtung in einem Inaktivitätszustand ist;
wenn die Routingvorrichtung in dem Inaktivitätszustand für eine vorbestimmte erste Erfassungszeit T1 bleibt, die Routingvorrichtung auswählt (201), in einen Schlafmodus einzutreten,
wenn die Routingvorrichtung in dem Schlafmodus für eine vorbestimmte zweite Erfassungszeit T2 bleibt, die Routingvorrichtung auswählt (201), in einen Quasi-Ausschaltmodul einzutreten;
eine Netzwerkkartenvorrichtung, die WiFi-Signale der Routingvorrichtung sucht und erfasst, wenn kein WiFi-Signal erfasst wird, Senden eines automatischen Aufweck/Einschaltbefehls an die Routingvorrichtung;
die Routingvorrichtung von dem Schlafmodus aufgeweckt wird (202), um in den normalen Modus zurückzukehren oder eingeschaltet zu werden und von dem Quasi-Ausschaltmodus wiedergewonnen wird, um in den normalen Modus gemäß dem empfangenen automatischen Aufweck/Einschaltmodus zurückzukehren;
in dem Schlafmodus, ein Firmwarenkörper der Routingvorrichtung immer noch läuft, die Routingvorrichtung einen Kanal überwacht, um einen mobilen Netzwerkanhang und Aktualisierungen aufrecht zu erhalten, und ein Empfangsverarbeitungsmodul der Routingvorrichtung läuft;
in dem Quasi-Ausschaltmodus, die Routingvorrichtung den Firmwarenkörper nicht laufen lässt, den mobilen Netzwerkanhang und Aktualisierungen nicht aufrecht erhält, und den Kanal nicht überwacht, das Empfangsverarbeitungsmodul drahtlose Signale überwacht, die von der Netzwerkkartenvorrichtung gesendet werden.

## Revendications

1. Un dispositif de routage pour faciliter un sommeil et un réveil dynamiques, dans lequel dispositif de routage comprend: un module de contrôle maître et un module de traitement de reception;
le module de commande maître est configuré pour sélectionner de passer en mode veille ou un mode quasi-hors tension en fonction d'un accès utilisateur réel et d'une situation de trafic: lorsque le dispositif de routage reste dans un état d'inactivité pendant un premier temps de détection préréglée, et sélectionne de passer en mode veille, dans lequel, en l'absence d'accès utilisateur, ou lorsqu'il y a un accès utilisateur mais pas de trafic, le dispositif de routage est déterminé dans l'état d'inactivité; lorsque le dispositif de routage reste en mode veille pendant un deuxième temps de détection préréglée T2, et sélectionne de passer en mode de quasi-hors tension; mettez le module de traitement de réception sous tension dans le cas où le dispositif de routage est en mode veille ou en mode quasi-hors tension; lorsqu'un utilisateur demande à accéder au dispositif de routage qui est entré en mode veille ou en mode quasi-hors tension, il reçoit une commande automatique de réveil/mise sous tension envoyée par un dispositif de carte réseau; après la réception de la commande de réveil/mise sous tension automatique par le module de traitement de réception, réveillez le dispositif de routage du mode veille pour revenir au mode normal, ou mettez sous tension et récupérez le dispositif de routage du mode quasi-hors tension à revenir au mode normal;
le module de traitement de réception est configuré pour recevoir la commande de réveil/mise sous tension automatique transmise par un module de transmission d'un dispositif de carte réseau après avoir été mis sous tension parle module de contrôle maître;
en mode veille, le corps de firmware du dispositif de routage est toujours en cours de fonctionner, le dispositif de routage surveille un canal afin de maintenir une connexion et des mises à jour du réseau mobile, et le module de traitement de réception du dispositif de routage est en cours de fonctionner;
en mode quasi-hors tension, le dispositif de routage ne maintient pas le corps de firmware en marche, ne maintient pas la connexion et les mises à jour du réseau mobile, et ne surveille pas le canal, le module de traitement de la réception surveille les signaux sans filtrants mis par le module de transmission du dispositif de carte réseau.

2. Le dispositif selon la revendication 1, dans lequel module de contrôle maître est en outre configuré pour mettre hors tension
le module de traitement de réception après le retour du dispositif de routage en mode normal;
le module de traitement de réception est en outre configuré pour être mis hors tension par le module de contrôle maître.

3. Un système de mise en oeuvre de sommeil et de réveil dynamiques, dans lequel le système comprend: un dispositif de carte réseau et un dispositif de routage; dans lequel le dispositif de carte réseau comprend: un module de commande maître de carte réseau et un module de transmission, et le dispositif de routage comprend: un module de commande maître et un module de traitement de réception;
dans lequel le module de commande maître de carte réseau est configuré pour initier la recherche et pour accéder aux signaux Wi-Fi, quand aucun signal Wi-Fi d'un dispositif de routage n'est pas trouvé, déterminez que le dispositif de routage est passé en mode veille ou en mode quasi-hors tension; initiez la recherche et l'accès aux signaux de Wi-Fi, et mettez le module de transmission sous tension lorsque vous déterminez que le dispositif de routage est passé en mode veille ou en mode quasi-hors tension;
le module de transmission est configuré pour envoyer une commande de réveil/mise sous tension automatique au dispositif de routage après avoir été mis sous tension par le module de contrôle maître de carte réseau;
le module de commande maître est configuré pour sélectionner de passer en mode veille ou mode quasi-hors tension en fonction d'un accès utilisateur réel et d'une situation de trafic: lorsque le dispositif de routage reste dans un état d'inactivité pendant un premier temps de détection préréglée Tl, est sélectionne de passer en mode veille, dans lequel, en l'absence d'accès utilisateur, ou bien il y a un accès utilisateur mais pas de trafic, le dispositif de routage est déterminé dans l'état d'inactivité; lorsque le dispositif de routage reste en mode veille pendant un deuxième temps de détection préréglée T2, et sélectionne de passer en mode quasi-hors tension; mettez le module de traitement de réception sous tension dans le cas où le dispositif de routage qui est entré en mode veille ou en mode quasi-hors tension; lorsqu'un utilisateur demande à accéder à un dispositif de routage entré en mode veille ou en mode quasi-mise hors tension, la commande de réveil/mise sous tension automatique envoyée par le dispositif de carte réseau est reçue; une fois que le module de traitement de réception a reçu la commande de réveil/mise sous tension automatique, réveillez le dispositif de routage du mode veille afin de revenir au mode normal, ou mettez le sous tension et récupérez le dispositif de routage du mode quasi-hors tension afin de revenir au mode normal;
le module de traitement de la réception est configuré pour recevoir la commande de réveil/mise sous tension automatique transmise par le module de transmission après avoir été mis sous tension par le module de contrôle maître;
en mode veille, un corps de firmware du dispositif de routage est toujours en cours de fonctionner, le dispositif de routage surveille un canal afin de maintenir une connexion et des mises à jour durés eau mobile, et le module de traitement de réception du dispositif de routage est en cours de fonctionner;
en mode quasi-hors tension, le dispositif de routage ne laisse pas le corps de firmware en cours de fonctionner, ne maintien pas la connexion et les mises à jour du réseau mobile, et ne surveille pas le canal, le module de traitement de réception surveille les signaux sans filtrants mis par le module de transmission du dispositif de carte réseau.

4. Le système selon la revendication 3, dans lequel le module de commande maître de carte réseau est en outre configuré pour mettre le module de transmission hors tension après le réveil du dispositif de routage du mode veille afin de revenir au mode normal ou après qu'il soit récupéré du mode quasi-hors tension au mode normal pour accéder aux signaux Wi-Fi avec succès;
le module de transmission est en outre configuré pour être mis hors tension par le module de contrôle maître de carte réseau;
le module de commande maître est en outre configuré pour mettre hors tension le module de traitement de reception après le retour du dispositif de routage au mode normal;
le module de traitement de réception est en outre configuré pour être mis hors tension par le module de contrôle maître.

5. Un procédé de mise en oeuvre le sommeil et le réveil dynamiques, dans lequel le procédé comprend:
lorsqu'il n'y a pas d'accès utilisateur, ou lorsqu'il existe un accès utilisateur mais il n'y a pas de trafic, un dispositif de routage détermine que le dispositif de routage est dans un état d'inactivité;
lorsque le dispositif de routage reste à l'état d'inactivité pendant un premier temps de détection préréglée T1,
le dispositif de routage sélectionne (201) passer en mode veille;
lorsque le dispositif de routage reste en mode veille pendant un deuxième temps de détection préréglée T2, le dispositif de routage sélectionne (201) passer en mode de quasi-hors tension;
un dispositif de carte réseau recherchant et détectant les signaux Wi-Fi du dispositif de routage, si aucun signal Wi-Fi est détecté, une commande de réveil/mise sous tension automatique est envoyée au dispositif de routage;
le dispositif de routage étant (202) réveillé du mode veille afin de revenir au mode normal ou étant mis sous tension et récupéré du mode quasi-hors tension pour revenir au mode normal en fonction de la commande de réveil/mise sous tension automatique reçue;
en mode veille, un corps de firmware du dispositif de routage est toujours en cours de fonctionner, le dispositif de routage surveille un canal afin de maintenir une connexion et des mises à jour de réseau mobile, et un module de traitement de réception du dispositif de routage est en cours de fonctionner;
en mode quasi-hors tension, le dispositif de routage ne laisse pas le corps du firmware en cours de fonctionner, ne maintien pas la connexion et les mises à jour du réseau mobile, et ne surveille pas le canal, le module de traitement de la réception surveille les signaux sans filtrants mis par le dispositif de carte réseau.
